# EUROPÄISCHE PATENTANMELDUNG

(11) **EP 2 292 407 A2**
(43) Veröffentlichungstag der Anmeldung: **09.03.2011**
(21) Anmeldenummer: 10170876.6
(22) Anmeldetag: 27.07.2010
(51) Int. Cl.: B29C 49/64, B29C 49/42

(54) **Verfahren und Vorrichtung zum Blasformen von Behältern**

(30) Priorität: 08.09.2009 DE 102009040559
(71) Anmelder: Krones AG, 93073 Neutraubling (DE)
(72) Erfinder: Meinzinger, Rupert, 94356 Kirchroth (DE)
(74) Vertreter: Grünecker, Kinkeldey, Stockmair & Schwanhäusser Anwaltssozietät

(57) **Zusammenfassung**

Bei einem Verfahren zum Blasformen von Behältern mit Querschnitten unrunder Form aus Vorformlingen (P), bei dem am Vorformling (P) mittels wenigstens eines Wärmetransferelements (T) ein zumindest in Umfangsrichtung variierendes Temperaturprofil erzeugt wird, wofür der Vorformling (P) und zumindest das Wärmetransferelement (T) durch eine Relativdrehbewegung in Umfangsrichtung des Vorformlings aufeinander ausgerichtet werden, wird bei der Relativdrehbewegung das Wärmetransferelement (T) relativ zum stehenden Vorformling (P) um eine Wärmetransferelement-Achse (8) gedreht. In der Vorrichtung zum Blasformen solcher Behälter sind das Wärmetransferelement (T) und der Halter (7) um eine Wärmetransferelement-Achse (8) drehbar und mit einem Drehantrieb (9) gekoppelt.

## Beschreibung

Die Erfindung betrifft ein Verfahren gemäß Oberbegriff des Patentanspruchs 1 sowie eine Vorrichtung gemäß Oberbegriff des Patentanspruchs 6.

Bei dem aus EP 0 958 124 A bekannten Verfahren wird jeder Vorformling relativ zum Wärmetransferelement schrittweise gedreht, um das Temperaturprofil zu erzeugen. Beispielsweise wird der Vorformling mittels eines Drehantriebs relativ zu stationären Heizeinrichtungen oder einer Kühldüse gedreht. Das Temperaturprofil wird entweder so erzeugt, dass der Vorformling gleichmäßig temperiert mit dem Temperaturprofil überlagert wird, oder das Temperaturprofil im Schrittbetrieb in dem kalten Vorformling erzeugt wird. Der Vorformling hat eine mechanisch detektierbare Umfangsmarkierung, zum Beispiel eine Kerbe im Stützring, um vorgegebene Drehpositionen für den Vorformling oder den daraus blasgeformten Behälter einstellen zu können. Da der Vorformling relativ schnell gedreht werden muss und gegebenenfalls schon plastisch verformbar ist, kann es bei der Relativdrehung zum Beispiel aufgrund von Fliehkräften zu unerwünschten Deformationen des Vorformlings oder Kollisionen mit dem Wärmetransferelement kommen.

Bei einem aus EP 1 279 477 A bekannten Verfahren und einer zur Durchführung des Verfahrens konzipierten Vorrichtung zum Blasformen von Flaschen wird ein berührungslos in Umfangsrichtung verteilte Kerben am Vorformling abtastender Sensor verwendet, um jeden Vorformling präzise durch Drehen um die Vorformlingsachse zu drehen. Der Vorformling wird in der Blasform unter Nutzen der Umfangskerben mit in der Form vorgesehenen Vorsprüngen verriegelt.

Bei einem aus US-A-3 892 830 bekannten Verfahren zum Blasformen ovaler Flaschen aus im Grundzug kreiszylindrischen Vorformlingen wird jeder Vorformling durch einen drehbaren Halter in Bezug auf zwei diametral gegenüberliegende, als Kühlbacken ausgebildete Wärmetransferelemente drehpositioniert, ehe die Kühlbacken an Teile der Umfangsoberfläche des Vorformlings angelegt werden, um das Temperaturprofil durch Wärmeentzug zu erzeugen. Das in Umfangsrichtung variierende Temperaturprofil wird erzeugt, um beim Blasformen der unrunden Umrissform aus dem kreiszylindrischen Vorformling eine bestimmte Materialverteilung in der Wand der Flasche zu erzielen.

Der Erfindung liegt die Aufgabe zugrunde, ein Verfahren und eine Vorrichtung der eingangs genannten Art anzugeben, die es ermöglichen, Behälter mit unrundem Umriss aus im Wesentlichen kreiszylindrischen Vorformlingen kontinuierlich und mit hoher Produktinsrate mit baulich und verfahrenstechnisch verringertem Aufwand blaszuformen.

Die gestellte Aufgabe wird mit den Merkmalen des Patentanspruchs 1 und des Patentanspruchs 6 gelöst.

Verfahrensgemäß wird in Abkehr von den bekannten Prinzipien nicht der Vorformling relativ zum Wärmetransferelement gedreht, um das Temperaturprofil zu erzeugen und/oder für den Blasvorgang oder Streckblasvorgang eine korrekte Positionierung vorzunehmen, sondern es wird das Wärmetransferelement relativ zum dabei stehenden Vorformling um eine Wärmetransferelement-Achse gedreht, um die erforderliche Relativdrehbewegung zwischen dem Wärmetransferelement und dem Vorformling bis zur korrekten gegenseitigen Positionierung zu erzeugen. Dabei wird jedes Wärmetransferelement von gegebenenfalls sehr vielen vorgesehenen in Abstimmung auf die Drehposition seines Vorformlings individuell gedreht. Dies lässt sich mit verfahrenstechnisch einfachen Maßnahmen realisieren und ermöglicht eine hohe Produktionsrate mit geringem Ausschuss, weil sich das Wärmetransferelement ohne Schaden für den Vorformling sehr schnell und präzise gesteuert drehen lässt.

Da in der Vorrichtung das Wärmetransferelement und der das Wärmetransferelement relativ zum Vorformling positionierende Halter um eine Wärmetransferelement-Achse drehbar angeordnet und mit einem Drehantrieb gekoppelt sind, lässt sich das Wärmetransferelement mit dem Halter in die zum Erzeugen des Temperaturprofils an der für den Blasvorgang erforderlichen Position am Vorformling drehen, ohne dass dafür der Vorformling gedreht zu werden braucht. Dadurch werden selbst bei hohen Produktionsraten Schäden an den Vorformlingen zuverlässig ausgeschlossen, und lässt sich eine hohe Positioniergenauigkeit erzielen. Nur ein Drehantrieb wird hierfür benötigt, der auch die richtige Blasformungs-Übergabeposition des Vorformlings einstellen kann.

Verfahrensgemäß werden der Halter und das Wärmetransferelement gemeinsam vor der Erzeugung des Temperaturprofils um die Wärmetransferelement-Achse bis in eine Drehposition gedreht, in der die Drehpositionen einer Gegenmarkierung am Wärmetransferelement oder am Halter und einer Umfangs-Markierung des Vorformlings übereinstimmen. Die Umfangs-Markierung des Vorformlings kann benutzt werden, um das Temperaturprofil exakt in Zuordnung zu der Umfangsposition der Umfangs-Markierung zu erzeugen, damit im nachfolgenden Blasformgang der unrunde Behälterumriss genau in Bezug auf die Umfangs-Markierung des Vorformlings, die dann gegebenenfalls auch am Behälter für andere Zwecke beibehalten wird, positioniert ist.

Ferner wird zweckmäßig der Vorformling erst nach oder bei der Erzeugung des Temperaturprofils mittels des Halters um die Wärmetransferelement-Achse in eine vorbestimmte Blasformungs-Übergabeposition seines Temperaturprofils gedreht. In dieser Herstellungsphase vor dem eigentlichen Blasformgang steht genügend Zeit zur Verfügung, um diese Drehbewegung sauber zu steuern und mit moderater Geschwindigkeit ablaufen zu lassen. Die Blasformungs-Übergabeposition wird dabei so eingestellt, dass gegebenenfalls trotz einer für alle übergebenen Vorformlinge durch eine Transportvorrichtung gleichen Weiterdrehung jeder Vorformling mit für den Formvorgang richtiger Positionierung seines Temperaturprofils in die Blasform gelangt.

Das Wärmetransferelement und/oder der Halter kann bzw. können kontinuierlich oder in Schritten gedreht werden.

Zweckmäßig wird ferner das Temperaturprofil mittels wenigstens eines den gleichmäßig vortemperierten Vorformling kontaktierenden, vorzugsweise fremdgekühlten, Kühlbackens erzeugt, und wird der Kühlbacken nach der Erzeugung des Temperaturprofils, das heißt nach einer vorbestimmten Einwirkzeit, relativ zum Halter und zum Vorformling in eine Passivposition verstellt, um das erzeugte Temperaturprofil nicht mehr zu verfälschen, und die weiteren Manipulationen am Vorformling, beispielsweise um diesen in eine korrekte Übergabeposition für die Blasformung zu drehen, ohne Zeitdruck durchführen zu können.

Bei einer zweckmäßigen Ausführungsform der Vorrichtung umfasst das Wärmetransferelement zumindest einen Kühlbacken, vorzugsweise sogar zwei diametral gegenüberliegende fremdgekühlte Kühlbacken. Der Kühlbacken erzeugt durch Wärmeentzug einen lokal exakt definierten Bereich mit niedrigerer Temperatur, am Umfang des Vorformlings, wobei das Temperaturprofil exakt auf die Anforderungen hinsichtlich der Materialverteilung beim nachfolgenden Blasformprozess abgestimmt werden kann. Zwei diametral gegenüberliegende Kühlbacken sind beispielsweise zweckmäßig zum Blasformen von Behältern mit ovalem oder rechteckigem Umriss. Die Fremdkühlung der Kühlbacken stellt selbst bei hoher Produktionsrate sicher, dass die Kühlbacken über die jeweils vorbestimmte Verweilzeit eine exakt definierte Wärmemenge entziehen. Alternativ wäre es denkbar, als Wärmetransferelement einen fremdbeheizten Heizbacken einzusetzen, der lokal zusätzliche Wärme in den Vorformling einbringt, die sich der bei einer gleichmäßigen Vortemperierung eingebrachten Wärme überlagert. Für kalte Vorformlinge wären Heizbacken entsprechend dem gewünschten Temperaturprofil zu gestalten, und um den ganzen Vorformling anzulegen.

Bei einer zweckmäßigen Ausführungsform sitzt der Halter und der zumindest eine Kühlbacken an einem gemeinsamen Träger, der um die Wärmetransferelement-Achse oder die Achse des Halters drehbar und mit dem Drehantrieb verbunden ist.

Baulich einfach und funktionssicher ist dem Träger eine auf den Kühlbacken und den Halter gemeinsam einwirkende, jedoch in Bezug auf die Wärmetransferelement-Achse stationäre Klammerbewegungsteuerung zugeordnet. Auf diese Weise lassen sich die erforderlichen Relativbewegungen zwischen dem Vorformling und dem Halter einerseits und dem Vorformling und dem Kühlbacken andererseits feinfühlig steuern. Die Klammerbewegungssteuerung sollte so ausgebildet sein, dass sie unabhängig von der relativen Drehposition des Trägers stets gleichartig wirkt.

Baulich einfach, und um unabhängig von Fertigungstoleranzen der Oberfläche des Vorformlings einen gleichmäßigen Kontaktdruck zu erzielen, ist der Kühlbacken, vorzugsweise gefedert, an einem mittels der Klammerbewegungssteuerung am Träger verstellbaren Hebel relativ beweglich angeordnet, der auch ein Schwenklager eines Schwenkarms des Halters tragen kann, wobei der Schwenkarm gegen den Kühlbacken federbeaufschlagt ist. Die Klammerbewegungssteuerung kann vorzugsweise eine Kurvensteuerung mit einer parallel zur Wärmetransferelement-Achse verstellbaren Kulissenhülse sein, um die stets gleiche Wirkung unabhängig von der relativen Drehposition des Trägers sicherzustellen. Die Abfederung des Kühlbackens wie auch die Federbeaufschlagung des Schwenkarms des Halters sichern eine schonende Einwirkung auf den Vorformling, wobei es besonders zweckmäßig ist, für den Halter und den Kühlbacken eine gemeinsame Klammerbewegungssteuerung vorzusehen, die die erforderlichen Klammerbewegungen des oder der Kühlbacken (Klammern zum Erzeugen des Temperaturprofils, Auseinanderschwenken in die Passivposition zum Beenden der Erzeugung des Temperaturprofils) und des Halters (zum Ergreifen und zum Positionieren des Vorformlings bei der Erzeugung des Temperaturprofils und zum Verdrehen in die Blasformungs-Übergabeposition) ausführen zu können. Die Federungen ermöglichen es auch, in einem begrenzten Bereich unterschiedliche, zum Beispiel aufgrund von Herstellungstoleranzen oder thermischen Einflüssen, unterschiedliche Vorformlings-Dimensionen verarbeiten zu können. Dies schließt jedoch nicht aus, den Kühlbacken und den Schwenkarm oder den Halter mit getrennten Steuerungen koordiniert, aber voneinander unabhängig zu bewegen.

Um bei einer Produktumstellung nur kurze Umrüstzeiten in Kauf zu nehmen, kann es zweckmäßig sein, den Kühlbacken und/oder den Schwenkarm bzw. den Halter am Träger austauschbar anzuordnen. Alternativ könnte diese Baueinheit zusammen mit dem Träger ausgetauscht werden.

Um den Vorformling stets sicher und dennoch schonend zu positionieren, und auch in die korrekte Blasformungs-Übergabeposition zu drehen, kann es ferner zweckmäßig sein, wenn der Halter zusätzlich ein Axialspannglied zum axialen Fixieren des im Halter positionierten Vorformlings, zum Beispiel am relativ formstabilen Mündungsbereich oder einen dort vorgesehenen stabilen Stützring, aufweist. Das Axialspannglied kann in etwa parallel zur Wärmetransferelement-Achse verstellbar sein und wird, vorzugsweise, ebenfalls durch die Klammerbewegungssteuerung zwangsverstellt, wenn diese den Halter zum Ergreifen des Vorformlings verstellt und wenn der Halter geöffnet wird, um den zum Blasformprozess vorbereiteten und korrekt drehpositionierten Vorformling zu übergeben.

Der Drehantrieb in der Vorrichtung wird zweckmäßig nicht nur zum Drehpositionieren zumindest des Wärmetransferelements eingesetzt, sondern zweckmäßig auch dazu, den Vorformling im Halter jeweils individuell in eine vorbestimmte Übergabeposition zu stellen, in der nach der Übergabe das erzeugte Temperaturprofil in genauer Drehzuordnung zu der für den Blasvorgang bereit stehenden Blasform angeordnet ist.

Der Drehantrieb kann ferner die Aufgabe übernehmen, das Wärmetransferelement und den Halter mit oder ohne Vorformling in eine bestimmte Vorformlings-Übernahme-Position zu verstellen, die mit der Übergabeposition übereinstimmen kann.

Bei einer zweckmäßigen Ausführungsform der Vorrichtung zum Blasformen von Behältern mit unrunden Umrissen sind in einem Temperaturprofil-Erzeugungsrotor mehrere Träger jeweils für mindestens ein Wärmetransferelement und den Halter und Drehantriebe, vorzugsweise elektrische Servomotoren, angeordnet. Dem Rotor sind ein von einer Heizstation mit temperierten Vorformlingen belieferter Übergabestern sowie ein einem Blasrotor jeden Vorformling in der vorbestimmten Übernahmeposition zuliefernder Transferstern zugeordnet. Im Übergabestern werden die temperierten Vorformlinge in zufälligen Drehpositionen angeliefert. Auf die zufällige Drehposition jedes angelieferten Vorformlings richten sich das Wärmetransferelement und der Halter durch eine entsprechende Drehbewegung ein, sobald der Vorformling zur Übernahme bereit ist. Das Temperaturprofil wird erzeugt und dann in eine bestimmte Drehorientierung gebracht, die auf die vorbestimmte Übergabeposition zum Blasrotor abgestimmt ist. Jeder Drehantrieb kann an eine Steuerung angeschlossen sein, die die Drehbewegungen und/oder die jeweilige Drehrichtung des Drehantriebs steuert. Wenigstens ein Sensor ist vorgesehen, der die jeweilige Drehposition jedes angelieferten Vorformlings beispielsweise anhand einer Umfangs-Markierung des Vorformlings vor oder bei der Übernahme detektiert und an die Steuerung meldet, die die Drehrichtung und das Drehausmaß der dann individuell auszuführenden Drehbewegung festlegt. Der Halter und die Kühlbacken werden dann über die Steuerung vom Drehantriebs bei oder nach der Übernahme des Vorformlings aus der vorher eingestellten Übernahmeposition in eine das zu erzeugende Temperaturprofil an die zufällige Drehposition des Vorformlings anpassende Wärmetransfer-Drehposition gestellt und, sobald das Temperaturprofil erzeugt worden ist, aus dieser Wärmetransfer-Drehposition in die Übergabeposition gebracht, in der der mit dem Temperaturprofil versehene Vorformling bezüglich der Blasformung korrekt positioniert ist. In anderen Worten wird der zufälligen Drehposition des Vorformlings bei der Anlieferung ohne am Vorformling eine Drehbewegung vornehmen zu müssen dadurch Rechnung getragen, dass das Wärmetransferelement und der Halter aus der für den Verfahrensablauf notwendigen Übernahmeposition ohne Vorformling jeweils in die zur zufälligen Drehposition des Vorformlings passende Wärmetransfer-Drehposition und nach der Erzeugung des Temperaturprofils mit dem Vorformling in die korrekte Übergabeposition gestellt werden. Für diese Aufgaben ist nur ein einzelner Drehantrieb erforderlich, und braucht auch nur eine einmalige individuelle Drehausrichtung vorgenommen zu werden.

Hierbei ist es zweckmäßig, wenn jeder Vorformling eine von einem Sensor bezüglich der zufälligen Drehposition des Vorformlings abtastbare Umfangs-Markierung, vorzugsweise eine Kerbe in einem Stützring im Mündungsbereich, aufweist, und der Halter einen in der Wärmetransfer-Drehposition mit der Kerbe verriegelbaren Vorsprung aufweist. Die Verriegelung stellt sicher, dass sich der Vorformling nicht relativ zum Wärmetransferelement unkontrolliert verdrehen kann, weil dann das Temperaturprofil nicht mehr zur Blasform passen würde. Es kann die Umfangs-Markierung des Vorformlings auch in der Blasform zum ordnungsgemäßen Positionieren des Vorformlings benutzt werden. Schließlich ist es möglich, diese Umfangs-Markierung, insbesondere eine Kerbe, später auch zum korrekten Positionieren von Oberflächenmarkierungen oder Etiketten oder eines Verschlusses des Behälters zu benutzen.

Anhand der Zeichnung wird eine Ausführungsform des Erfindungsgegenstandes erläutert. Es zeigen:
- Fig. 1: eine Schemadraufsicht auf einen Teil einer Behälter-Blasformmaschine,
- Fig. 2: eine Schemadraufsicht auf die gesamte Blasformmaschine,
- Fig. 3: eine Schnittdarstellung einander zugeordneter Komponenten, Erzeugen eines Temperaturprofils in einem Vorformling,
- Fig. 4: eine Teilschnittsansicht eines Ausschnitts eines Temperaturprofil- Erzeugungsrotors der Blasformmaschine in einer bestimmten Betriebspositi- on, und
- Fig. 5: ein vergrößertes Detail, teilweise im Schnitt, aus Fig. 4.

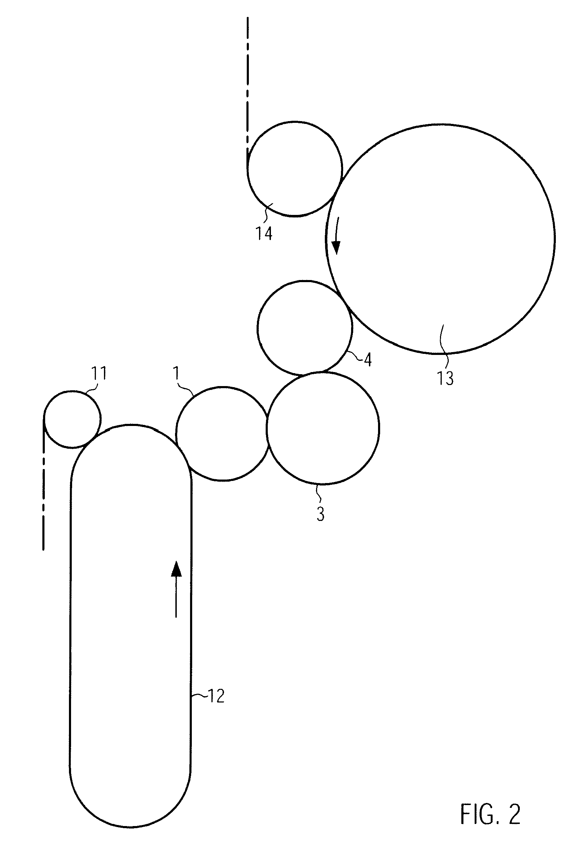

Fig. 2 verdeutlicht die nicht beschränkende, beispielhafte Auslegung einer Blasformmaschine beispielsweise zum Herstellen (Blasformen oder Streckblasformen) von Behältern mit unrundem Querschnitt aus Vorformlingen aus thermoplastischem Material, typischerweise Kunststoffbehälter für Waschgels, Kosmetika, Reinigungsmittel und dergleichen. Über einen Zulieferstern 11 wird ein Heizmodul 12 mit hier nicht gezeigten Vorformlingen beliefert, die in dem Heizmodul 12, vorzugsweise unter permanenter Rotation, gleichmäßig temperiert und dann über einen Übergabestern 1 einem Temperaturprofil-Erzeugungs-Rotor 3 übergeben werden. Von dem Rotor 3 werden die mit dem Temperaturprofil versehenen Vorformlinge über einen Transferstern 4 einem Blasrotor 13 übergeben, der die Behälter formt, die schließlich über einen Auslaufstern 14 abgeführt und weiterbehandelt werden.

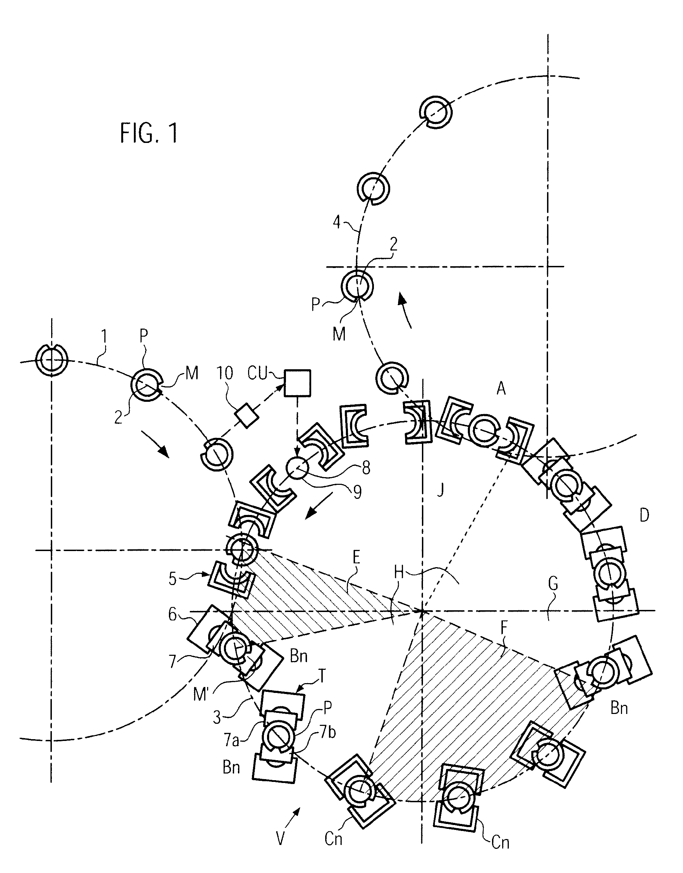

In Fig. 1 sind ein Teil des Übergabesterns 1, der Rotor 3 und der Transferstern 4 angedeutet. Die Vorformlinge P aus thermoplastischem Material werden vom Übergabestern 1 in zufälligen Drehpositionen geliefert. Beispielsweise weist jeder Vorformling P eine Umfangs-Markierung M versetzt zu seiner Mitte 2 auf, wobei die Umfangs-Markierung M die zufällige Drehposition des Vorformlings P im Übergabestern 1 abtastbar wiedergibt.

Dem Übergabestern 1 ist beispielsweise zumindest ein Sensor 10 zugeordnet, der berührungslos die jeweilige zufällige Drehposition jedes Vorformlings P abgreift und an eine Steuerung CU meldet, die mit jedem von mehreren im Rotor 3 in gleichmäßigem Umfangsabständen verteilten Drehantrieben 9 in Steuerverbindung steht. Bei einer alternativen Ausführungsform könnten die Vorformlinge P im Übergabestern auch schon in identischen relativen Drehpositionen angeliefert werden.

Vom Rotor 3 werden die mit dem Temperaturprofil versehenen Vorformlinge P in auf den Blasrotor 13 abgestimmten, identischen Übergabepositionen an den Transferstern 4 übergeben. Zum Erzeugen des Temperaturprofils in exakter Zuordnung zu der Umfangs-Markierung M stehen die Drehantriebe 9 mit jeweils zugeordneten Wärmetransferelementen T und Haltern 7 zum Fixieren und Positionieren des jeweiligen Vorformlings P so in Verbindung, dass die Wärmetransferelemente T und die Halter 7 z.B. um Wärmetransferelement-Achsen 8 im Rotor 3 vor der Übernahme relativ zu den Vorformlingen drehverstellbar sind, und zwar nach Maßgabe von der Steuerung CU übermittelter Steuerbefehle, die sich nach den jeweiligen Signalen des zumindest einen Sensors 10 richten, und ausgehend von einer vorbestimmten und vorher eingestellten Übernahmeposition am Rotor 3.

Bei der gezeigten Ausführungsform ist jedes von hier zwei vorgesehenen Wärmetransferelementen T ein Kühlbacken 6, und ist jeder Halter 7 zweiteilig mit Halterteilen 7a, 7b ausgebildet. Zusätzlich zu der vom Drehantrieb 9 einsteuerbaren Drehbewegung sind die Wärmetransferelemente T bzw. die Kühlbacken 6 und die Halterteile 7a, 7b allgemein quer zur Wärmetransferelement-Achse 8 beweglich, wie dies später erläutert wird.

Für den Rotor 3 sind unterschiedliche Sektoren E, H, F, G und J innerhalb einer 360°-Drehung angedeutet, die unterschiedlichen Verfahrensphasen zugeordnet sind. Der Sektor E beginnt an einer Vorformlings-Übernahmeposition vom Übergabestern 1, in welcher sich die Wärmetransferelemente T und die Halterteile 7a, 7b in einer geöffneten Übernahmeposition A befinden und dabei in etwa tangential zum Umfang des Rotors 3 ausgerichtet sind. Hier werden die Wärmetransferelemente T und der Halter 7 z.B. um die Wärmetransferelement-Achse 8 durch den Drehantrieb 9 so relativ zur zufälligen Drehposition des Vorformlings P verdreht, bis die Umfangsmarkierung M am Vorformling P mit einer Gegenmarkierung M' des Halters 7 übereinstimmt. Gegen Ende des Sektors E werden die Halterteile 7a, 7b zusammengestellt werden, um den bis dahin noch im Übergabestern 1 undrehbar gehaltenen Vorformling P ergreifen und anschließend im Sektor H aus dem Übergabestern 1 zu entnehmen. Innerhalb des darauffolgenden Sektors H erfolgt gegebenenfalls keine Drehung um die Wärmetransferelement-Achse 8, sondern in der zufälligen Drehposition Bn werden nun die Wärmetransferelemente T, das heißt die Kühlbacken 6, zueinander verstellt, bis sie in Drehrichtung auf die Markierung M vorbestimmte Teile der Oberfläche des Vorformlings P fast oder voll kontaktieren. Dieser Vorgang ist am Beginn des folgenden Sektors F abgeschlossen.

Innerhalb des Sektors F wird der Kontakt oder Beinahe-Kontakt aufrecht gehalten und wird das gewünschte Temperaturprofil in Zuordnung zu der Umfangs-Markierung M erzeugt. Dabei erfolgt z.B. keine weitere Drehung um die Wärmetransferelement-Achse 8 mehr. Am Ende des Sektors F werden die Wärmetransferelemente T bzw. die Kühlbacken 6 in eine abgehobene Passivposition verstellt. Damit ist die Erzeugung des Temperaturprofils abgeschlossen. Der Halter 7 hält den Vorformling P jedoch weiterhin fest. Innerhalb des darauffolgenden Sektors G erfolgt eine weitere Drehung um die Wärmetransferelement-Achse 8 aus der zufälligen Drehposition Bn in die Drehposition D, das heißt, zu einer z.B. tangentialen Ausrichtung auch der Markierung M. Am Beginn des Sektors J werden die Halterteile 7a, 7b auseinandergespreizt, wenn nicht dargestellte Greifeinrichtungen des Transfersterns 4 den Vorformling P bis zum Ende des Sektors J vollständig übernommen haben, sodass die Halterteile 7a, 7b und die Wärmetransferelemente T für einen neuen Vorformling P bereit sind. Im Sektor G erfolgt die Drehung so, dass, beispielsweise, die Umfangs-Markierung M in Bewegungsrichtung jeweils hinten liegt, so dass alle Vorformlinge P im Transferstern 4 mit derselben Übergabeposition gefördert werden, in der das erzeugte Temperaturprofil zu den baulichen Gegebenheiten in einer Blasform des Blasrotors 13 richtig steht.

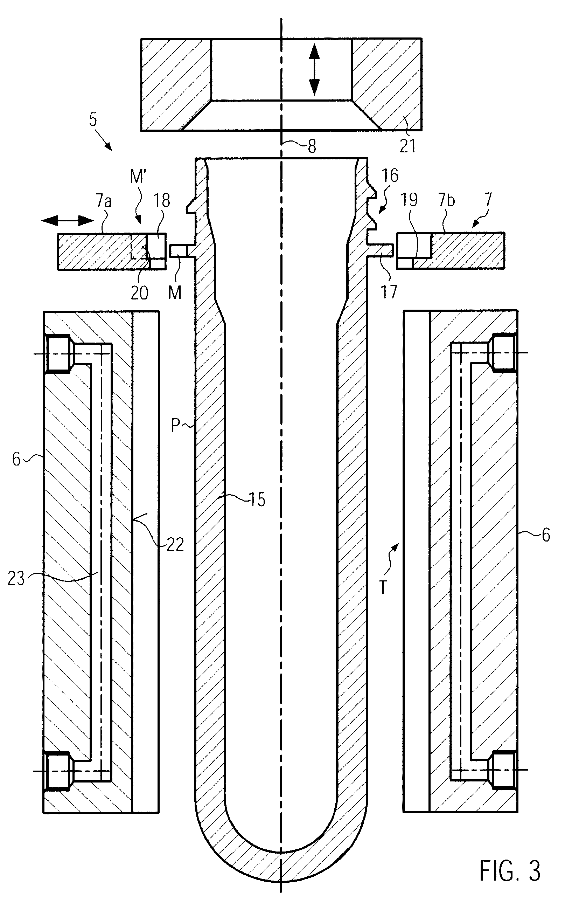

Fig. 3 verdeutlichen in Explosionsdarstellung Komponenten, die bei der Erzeugung des Temperaturprofils im Vorformling P eingesetzt werden. Der Vorformling P besitzt einen dickwandigeren Körper 15 und einen bereits fertig ausgeformten Mündungsbereich 16 (beispielsweise mit einem Gewinde oder einem Kronkorken-Haltewulst, oder Aufsteckverbindungs-Elementen) und beispielsweise einen Stützring 17, in welchem die Umfangs-Markierung M in Form einer Kerbe vorgesehen ist. Der Mündungsbereich 16 benötigt kein Temperaturprofil, da er beim Blasformprozess im Wesentlichen nicht mehr umgeformt wird. Jeder Halterteil 7a, 7b des Halters 7 hat eine oberseitig offene Ausnehmung 18, einen Auflagerand 19 annähernd entsprechend dem Umfangsverlauf des Stützringes 17 definiert. Beispielsweise im Halterteil 7a ist die Gegenmarkierung M' in Form eines Vorsprungs 20 geformt, der mit der Umfangs-Markierung M, das heißt der Kerbe im Stützring 17, verriegelbar ist, wenn die Halterteile 7a, 7b in Richtung des Doppelpfeiles weiter zueinander gestellt sind, als in Fig. 3 gezeigt. Jeder Kühlbacken 6 ist beispielsweise mit einer Fremdkühlung 23 ausgestattet und weist wenigstens eine dem im Wesentlichen kreiszylindrischen Umfangsverlauf des Körpers 15 des Vorformlings P entsprechend gekrümmte Kontaktfläche 22 auf.

Der Umriss der Kontaktfläche 22 ist beliebig und hängt u.a. vom Umriss des gewünschten Temperaturprofils ab. Optional ist ferner ein zum Halter 7 gehörendes Axialspannglied 21 vorgesehen, das in Richtung des Doppelpfeiles und annähernd parallel zur Wärmetransferelement-Achse 8 verstellbar ist, um den Mündungsbereich 16 des Vorformlings P auf den Auflagerändern 19 zu fixieren, und unerwünschte Wärmeverluste aus dem Mündungsbereich 16 zu vermeiden.

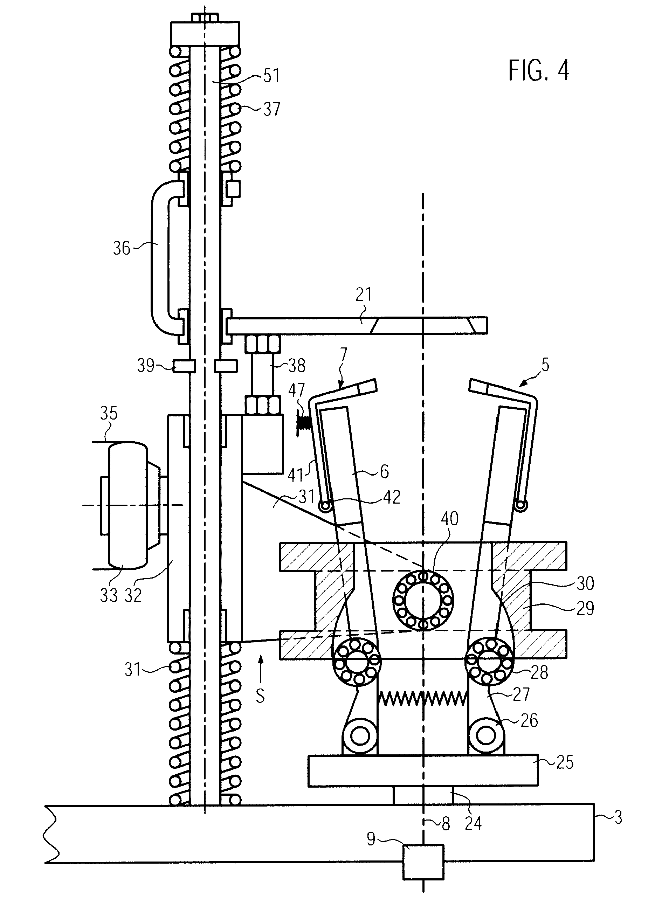

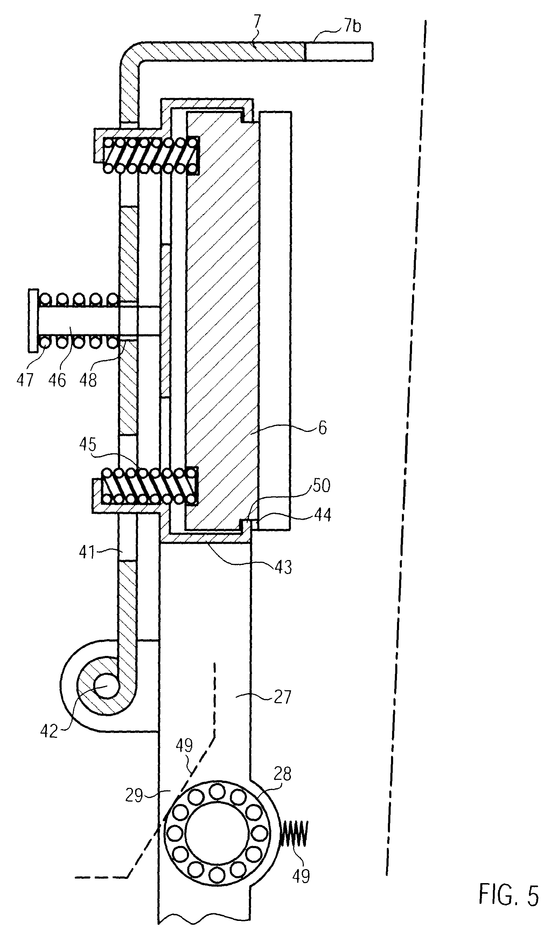

Die Fig. 4 und 5 zeigen in Seitenansicht Details der zum Erzeugen des Temperaturprofils an am Rotor 3 vorgesehenen Komponentengruppen.

Im Rotor 3 ist eine Welle 24 eines beispielsweise scheibenförmigen Trägers 25 drehbar gelagert und mit dem Drehantrieb 9, zum Beispiel einem elektrischen Servomotor, verbunden und um die Achse 8 drehbar. Seitlich versetzt zur Achse 8 ist auf dem Rotor 3 eine Säule 51 stationär gelagert. Auf dem Träger 25 sind Schwenklager 26 zweier Hebel 27 angeordnet, die Drucklager 28 tragen, die mit einer rotationssymmetrischen Kurvenbahn 30 einer Kulissenhülse 29 zusammenwirken. Die Kulissenhülse 29 ist an einer Konsole 31 angeordnet, die mit einer Führungshülse 32 auf der Säule 51 gegen die Kraft einer Feder 34 verschiebbar ist. An der Führungshülse 32 ist ein Tastrad 33 angeordnet, das mit einer schematisch dargestellten Kurvenbahn 35 einer Klammerbewegungssteuerung S zusammenwirkt. Oberhalb der Führungshülse 32 ist auf der Säule 51 ein das Axialspannglied 21 tragender Bügel 36 unter der Kraft einer Feder 37 verschiebbar und gegen einen Anschlag 38 an der Führungshülse 32 anlegbar. Der Verschiebehub des Bügels 36 wird durch einen Anschlag 39 an der Säule 51 begrenzt. An jedem Hebel 27 ist ein Kühlbacken 6 angeordnet, sowie ein Schwenklager 42 für einen Schwenkarm 41 des Halters. Der Schwenkarm 41 wird durch eine Feder 47 in Richtung zum Kühlbacken 6 beaufschlagt. Durch Auf- und Abverstellen der Führungshülse 31 werden die Hebel 27 gleichsinnig gegen bzw. unter der Kraft einer Öffnungsfeder 49 verschwenkt, um einen in Fig. 4 nicht gezeigten Vorformling P zu übernehmen, mittels des Halters und des Axialspannglieds 21, 7 zu positionieren, das Temperaturprofil zu erzeugen, die Kühlbacken 6 in die Passivposition zu bringen, den Halter 7 zu öffnen, und das Axialspannglied 21 wieder anzuheben. Die Baueinheit: Träger 25, Hebel 27, etc. kann ferner gesteuert durch den Drehantrieb 9 Drehbewegungen um die Achse 8 ausführen.

Gemäß Fig. 5 ist jeder Kühlbacken 6 in einer schüsselförmigen Fassung 43 am Hebel 27 angeordnet, die mit Anschlägen 50 in Hubbegrenzungsausnehmungen 44 des Kühlbackens 6 eingreift. Der Kühlbacken 6 wird z.B. von in der Fassung 43 abgestützten Druckfedern 45 in Fig. 5 nach rechts beaufschlagt und hat ein vorbestimmtes Bewegungsspiel in der Fassung 43. Der Schwenkarm 41 besitzt Ausnehmungen zum Durchgriff eines Teils der Fassung 43 und trägt am freien Ende den Halterteil 7b des Halters 7. In einem Bodenabschnitt der Fassung 43 ist ein Führungsbolzen 46 festgelegt, der eine Öffnung 48 des Schwenkarms 41 durchsetzt und die Feder 47 trägt, die den Schwenkarm 41 in Schwenkrichtung um die Schwenklagerung 42 im Uhrzeigersinn beaufschlagt. Da die Schwenkbewegungen jedes Hebels 27 durch die Verstellung der Führungshülse 32 gesteuert werden, folgt auch das Axialspannglied 21 in Fig. 4 diesen Bewegungen, um den Mündungsbereich 16 des Vorformlings P von Fig. 3 abzudecken, wenn die Halterteile 7a, 7b zueinander geschwenkt worden sind, und um den Stützkragen 17 auf den Auflagerändern 19 festzuspannen.

Innerhalb des linken Sektors H in Fig. 1 werden zunächst die Halterteile 7a, 7b nur soweit zueinander gestellt, dass der Vorformling P ausreichend positioniert ist. Erst ab Beginn des Sektors F in Fig. 1 werden die Halterteile 7a, 7b durch weiteres Verschwenken der Hebel 27 nach innen verstellt, bis die Kühlbacken 6 mit ihren Kontaktflächen 22 am Vorformling P anliegen oder diesem nahe gegenüberstehen, so dass ein Wärmetransfer von dem Körper 15 in den Kühlbacken 6 stattfinden kann. Im Kontakt mit dem Vorformling P kann der Kühlbacken 6 gegen die Federn 45 etwas nachgeben, um exakt anzuliegen und Herstellungstoleranzen zu kompensieren.

Sobald ab Beginn des Sektors G in Fig. 1 die Kühlbacken 6 durch Verschwenken der Hebel 27 nach außen vom Vorformling P gelöst sind, werden die Schwenkarme 41 durch die Federn 47 beaufschlagt, damit die Halterteile 7a, 7b den Vorformling P weiterhin positionieren. Die Kühlbacken 6 befinden sich dann in der Passivposition weiter entfernt vom Vorformling P, jedoch noch nicht in der vollen Öffnungsstellung beispielsweise von Fig. 4. Erst ab Beginn des Sektors J in Fig. 1 werden auch die Halterteile 7a und 7b durch weiteres Aufschwenken der Hebel 27 auseinanderbewegt, um den mit dem gewünschten Temperaturprofil versehenen Vorformling P in der Übergabeposition A vom Transferstern 4 übernehmen zu lassen.

Bei einer alternativen, nicht gezeigten Ausführungsform könnten die Schwenkbewegungen der Schwenkarme 41, die Bewegungen der Kühlbacken 6 und des Axialspannglieds 21 durch getrennte Mechanismen oder Antriebe gesteuert werden, Drehbewegungen hingegen durch den Drehantrieb 9.

## Patentansprüche

1. Verfahren zum Blasformen von Behältern mit Querschnitten unrunder Form aus Vorformlingen (P) aus thermoplastischem Material, bei dem für die Blasformung am in einem Halter (7) positionierten Vorformling (P) mittels wenigstens eines Wärmetransferelements (T) ein zumindest in Umfangsrichtung des Vorformlings (P) variierendes Temperaturprofil erzeugt wird, wofür der Vorformling (P) und zumindest das Wärmetransferelement (T) durch eine Relativdrehbewegung in Umfangsrichtung aufeinander ausgerichtet werden, **dadurch gekennzeichnet, dass** bei der Relativdrehbewegung bis zur gegenseitigen Ausrichtung das Wärmetransferelement (T) relativ zum Vorformling (P) zumindest im Wesentlichen um eine Wärmetransferelement-Achse (8) gedreht wird.

2. Verfahren nach Anspruch 1, **dadurch gekennzeichnet, dass** vor der Erzeugung des Temperaturprofils der Halter (7) und das Wärmetransferelement (T) gemeinsam um die Wärmetransferelement-Achse (8) und relativ zum Vorformling (P) gedreht werden, bis eine Gegenmarkierung (M') am Wärmetransferelement (T) oder Halter (7) und eine Umfangs-Markierung (M) des Vorformlings (P) übereinstimmen.

3. Verfahren nach Anspruch 1, **dadurch gekennzeichnet, dass** erst nach oder während der Erzeugung des Temperaturprofils der Vorformling (P) mittels des Halters (7) um die Wärmetransferelement-Achse (8) in eine vorbestimmte Blasformungs-Übergabeposition (D, A) seines Temperaturprofils gedreht wird.

4. Verfahren nach wenigstens einem der vorhergehenden Ansprüche, **dadurch gekennzeichnet, dass** das Wärmetransferelement (P) und der Halter (7) kontinuierlich oder in Schritten mittels eines gemeinsamen Drehantriebs (9) gedreht werden.

5. Verfahren nach wenigstens einem der vorhergehenden Ansprüche, **dadurch gekennzeichnet, dass** das Temperaturprofil mittels wenigstens eines den Vorformling (P) kontaktierenden oder nahezu kontaktierenden, vorzugsweise fremdgekühlten, Kühlbackens (6) erzeugt wird, und dass der Kühlbacken (6) nach der Erzeugung des Temperaturprofils relativ zum Halter (7) und zum Vorformling (P) in eine Passivposition (Bn) verstellt wird.

6. Vorrichtung zum Blasformen von Behältern mit Querschnitten unrunder Form aus Vorformlingen (P) aus thermoplastischem Material, mit wenigstens einem Wärmetransferelement (T) zum Beaufschlagen eines Teils des Umfangs des Vorformlings zum Erzeugen eines am Vorformling (P) zumindest in Umfangsrichtung variierenden Temperaturprofils, und mit einem Halter (7) zum Positionieren des Vorformlings (P) zumindest beim Erzeugen des Temperaturprofils, **dadurch gekennzeichnet, dass** das Wärmetransferelement (T) und der Halter (7) im Wesentlichen um eine Wärmetransferelement-Achse (8) relativ zum stehenden Vorformling (P) drehbar angeordnet und mit einem Drehantrieb (9) gekoppelt sind.

7. Vorrichtung nach Anspruch 6, **dadurch gekennzeichnet, dass** das Wärmetransferelement (T) zumindest einen Kühlbacken (6), vorzugsweise zwei diametral gegenüberliegende, fremdgekühlte Kühlbacken 86), umfasst.

8. Vorrichtung nach Anspruch 7, **dadurch gekennzeichnet, dass** der Halter (7) und der Kühlbacken (6) an einem gemeinsamen Träger (25) angeordnet sind, der um die Wärmetransferelement-Achse (8) drehbar und mit dem Drehantrieb (9) verbunden ist, und dass dem Träger (25) eine auf den Kühlbacken (6) und den Halter (7) gemeinsam einwirkende, stationäre Klammerbewegungssteuerung (S) zugeordnet ist.

9. Vorrichtung nach Anspruch 8, **dadurch gekennzeichnet, dass** der Kühlbacken (6), vorzugsweise gefedert, an einem mittels der Klammerbewegungssteuerung (S), vorzugsweise einer Kurvensteuerung mit einer parallel zur Wärmetransferelement-Achse (8) verstellbaren rotationssymmetrischen Kulissenhülse (29), am Träger (25) schwenkbaren Hebel (27) angeordnet ist, der ein Schwenklager (42) eines einen Halterteil (7a, 7b) aufweisenden Schwenkarms (41) des Halters (7) trägt, und dass der Schwenkarm (41) zum Kühlbacken (6) hin federbeaufschlagt ist.

10. Vorrichtung nach Anspruch 8, **dadurch gekennzeichnet, dass** der Kühlbacken (6) und/oder der Halter (7) am Träger (25) austauschbar angeordnet ist bzw. sind.

11. Vorrichtung nach Anspruch 6, **dadurch gekennzeichnet, dass** zum Halter (7) ein in etwa parallel zur Wärmetransferelement-Achse (8) verstellbares, vorzugsweise durch die Klammerbewegungssteuerung (S) zwangsverstellbares, Axialspannglied (21) zum Fixieren des Vorformlings (P) im Halter (7) gehört.

12. Vorrichtung nach wenigstens einem der vorhergehenden Ansprüche 6 bis 11, **dadurch gekennzeichnet, dass** der Vorformling (P) mittels des Drehantriebs (9) und des Halters (7) in eine vorbestimmte Übergabeposition (A) drehverstellbar ist.

13. Vorrichtung nach wenigstens einem der Ansprüche 6 bis 12, **dadurch gekennzeichnet, dass** der Kühlbacken (6) und der Halter (7) mittels des Drehantriebs (9) in eine vorbestimmte Übernahmeposition (D) drehverstellbar sind.

14. Vorrichtung nach wenigstens einem der Ansprüche 6 bis 13, **dadurch gekennzeichnet, dass** in einem Rotor (3) mehrere Träger (25) und Drehantriebe (8), vorzugsweise elektrische Servomotoren, angeordnet sind, dass dem Rotor (3) ein von einer Heizstation (12) belieferter Übergabestern (1) für darin in zufälligen Drehpositionen angelieferte, temperierte Vorformlinge (P) sowie ein einem Blasrotor (13) Vorformlinge (P) in der vorbestimmten Übergabeposition zuliefernder Transferstern (4) zugeordnet sind, dass jeder Drehantrieb (8) an eine Steuerung (CU) angeschlossen ist, dass wenigstens ein Sensor (10) zum Detektieren der jeweiligen zufälligen Drehposition jedes angelieferten Vorformlings (P) vorgesehen und an die Steuerung (CU) angeschlossen ist, und dass der Halter (7) und der Kühlbacken (6) über die Steuerung (CU) vom Drehantrieb (8) bei Übernahme des Vorformlings (P) vom Übergabestern (1) aus der Übernahmeposition (D) in eine das zu erzeugende Temperaturprofil an die zufällige Drehposition des Vorformlings (P) anpassende Wärmetransfer-Drehposition (Bn) und aus dieser mit dem Vorformling (P) in die Übergabeposition (A) stellbar sind.

15. Vorrichtung nach wenigstens einem der Ansprüche 6 bis 14, **dadurch gekennzeichnet, dass** jeder Vorformling (P) eine vom Sensor (10) abtastbare Umfangs-Markierung (M), vorzugsweise eine Kerbe in einem Stützring (17), aufweist, und dass der Halter (7) einen in der Wärmetransfer-Drehposition (Cn, Bn) mit der Kerbe verriegelbaren Vorsprung (20) aufweist.
